# EUROPÄISCHE PATENTANMELDUNG

(11) **EP 1 826 032 A1**
(43) Veröffentlichungstag der Anmeldung: **29.08.2007**
(21) Anmeldenummer: 07000513.7
(22) Anmeldetag: 11.01.2007
(51) Int. Cl.: B60C 25/14

(54) **Verfahren und Vorrichtung zum Füllen eines Luftreifens eines Fahrzeugrades**

(30) Priorität: 24.02.2006 DE 102006008794
(71) Anmelder: Hofmann Maschinen- und Anlagenbau GmbH, 67550 Worms-Rheindürkheim (DE)
(72) Erfinder: Ruppert, Jens, 64750 Lützelbach (DE)
(74) Vertreter: Eisenführ, Speiser & Partner

(57) **Zusammenfassung**

Ein Verfahren und eine Vorrichtung zum Füllen eines Luftreifens 1, eines Fahrzeugrades mit Füllluft, bei dem die Füllluft mit einer auf die Reifenseitenwand dicht aufgesetzten Füllglocke 4 erfolgt und nach dem Füllen des Reifens 1 ein Füllraum 11 entlüftet wird, wobei nach dem Entlüften der Füllraum 11 erneut mit Druckluft beaufschlagt wird und die Entlüftung über eine geringere Anzahl an Entlüftungskanälen erfolgt als bei der ersten Entlüftung.

## Beschreibung

Die Erfindung betrifft ein Verfahren zum Füllen eines Luftreifens eines Fahrzeugrades mit Füllluft nach dem Oberbegriff des Patentanspruches 1 und eine Vorrichtung hierzu nach dem Oberbegriff des Patentanspruches 5.

Beim Befüllen eines Luftreifens eines Fahrzeugrades, insbesondere Kraftfahrzeugrades in einer Füllstation einer teilautomatischen oder automatischen Reifenmontageanlage wird die Füllluft aus einem Druckluftbehälter über gesteuerte Füllventile in das Innere einer Füllglocke geliefert. Die Füllglocke liegt mit ihrem unteren Rand auf der oben liegenden Reifenseitenfläche luftdicht auf. Die Füllluft wird durch einen Spalt zwischen dem abgedrückten, oben liegenden Reifenwulst und dem Felgenhorn in das Reifeninnere eingeblasen. Beim Füllvorgang hebt sich der oben liegende Reifenwulst an und liegt bei Erreichen eines bestimmten Fülldruckes luftdicht am Felgenhorn an. Während des Füllvorgangs kann das Fahrzeugrad auf einem Fülltisch oder einem Gurtband oder anderen geeigneten Unterlagen aufliegen. Nach Beendigung des Füllvorgangs wird der Füllraum entlüftet und die Füllglocke angehoben, so dass das Fahrzeugrad aus der Füllstation entnommen und weitertransportiert werden kann. Beim Abheben der Füllglocke von der Reifenseitenfläche kommt es zum Vermischen der Außenluft mit der im Füllraum, insbesondere im Glockeninnern befindlichen Restluft und in Folge davon zu Nebelbildung.

Aufgabe der Erfindung ist es, ein Verfahren und eine Vorrichtung der eingangs genannten Art zu schaffen, bei welchen beim Abheben der Füllglocke von der Reifenseitenfläche eine Nebelbildung verhindert wird oder entstandener Nebel beseitigt wird.

Diese Aufgabe wird erfindungsgemäß beim Verfahren durch die Merkmale des Patentanspruches 1 und bei der Vorrichtung durch die Merkmale des Patentanspruches 5 gelöst.

Bei der Erfindung wird nach dem Entlüften des Füllraumes der Füllraum erneut mit Druckluft beaufschlagt und mit gegenüber dem vorherigen Entlüften verringerter Anzahl an Entlüftungsauslässen entlüftet. Vorzugsweise erfolgt die erneute Druckbeaufschlagung mit einem gegenüber dem Fülldruck beim Füllen des Reifens reduzierten Druck, welcher ein Bruchteil des Fülldruckes, beispielsweise 1/10 des Fülldruckes, sein kann. Dabei vermischt sich die nach dem Entlüften im Füllraum verbliebene Restluft mit der erneut zugeführten Druckluft, wobei die Entlüftung über eine verringerte Anzahl an Entlüftungsventilen, beispielsweise ein Entlüftungsventil erfolgt. Der reduzierte Druck kann 0,3 x 10⁵ Pa (300 mbar) größenordnungsmäßig betragen. Je nach Radtyp kann er größer oder kleiner sein.

Beim Anheben der Füllglocke von der Reifenseitenwand bildet sich dann kein Nebel mehr oder es ist kein Nebel mehr sichtbar. Das Abheben der Füllglocke kann während des zweiten Entlüftungsvorgangs oder bei Beendigung dieses zweiten Entlüftungsvorganges stattfinden.

Anhand der Figuren wird die Erfindung noch näher erläutert.

Es zeigt:
- Fig. 1: ein erstes Ausführungsbeispiel; und
- Fig. 2: ein zweites Ausführungsbeispiel der Erfindung.

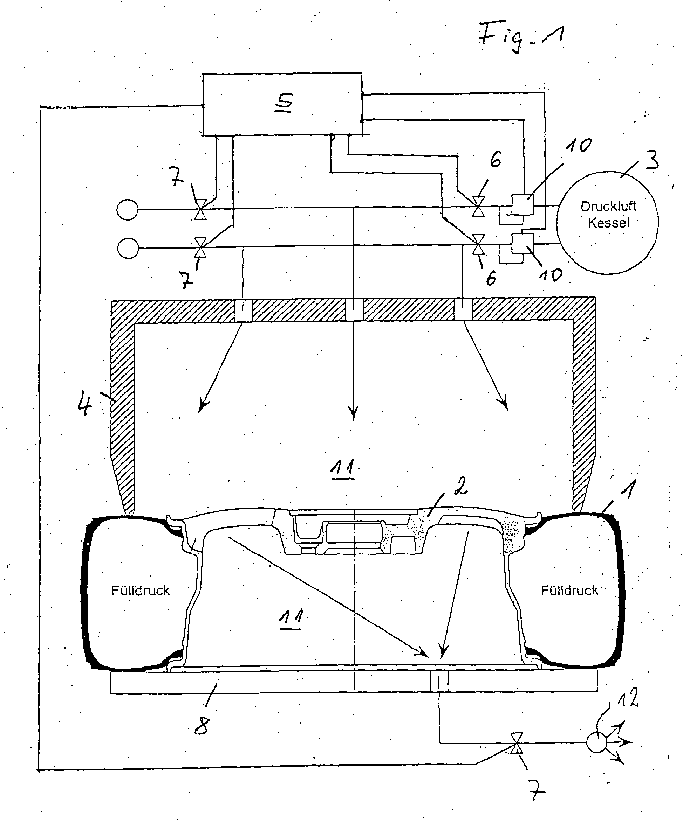

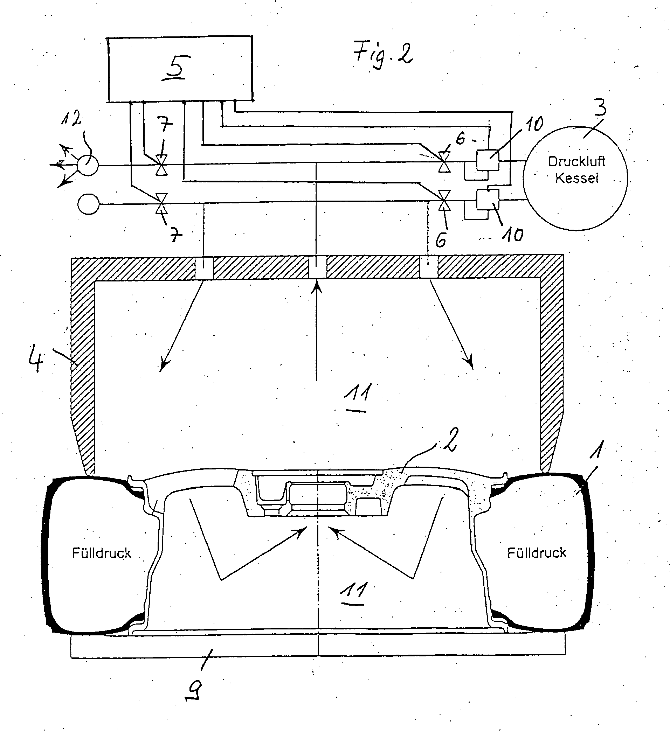

Die in den Fig. 1 und 2 dargestellten Ausführungsbeispiele der Erfindung beinhalten eine Füllglocke 4, welche mit ihrem unten liegenden Umfangsrand auf eine oben liegende Seitenwand eines Luftreifens 1 in einer Füllstation aufgesetzt wird. Beim Befüllen wird der oben liegende Reifenwulst vom Felgenhorn eines Scheibenrades 2 nach unten gedrückt, so dass die Füllluft zwischen dem oben liegenden Wulst und dem oben liegenden Felgenhorn des Scheibenrades 2 in das Reifeninnere gelangen kann. Bei den dargestellten Ausführungsbeispielen liegt das Scheibenrad 2 mit dem auf seine Felge montierten Luftreifen 1 auf einer Unterlage auf. Beim Ausführungsbeispiel der Fig. 1 handelt es sich um einen Fülltisch 8 und beim Ausführungsbeispiel der Fig. 2 um ein Gurtband 9.

Die Füllluft wird als Druckluft in einem Druckluftbehälter 3 in Bereitschaft gehalten. Der Druck im Druckluftbehälter 3 kann beispielsweise 8 x 10⁵ Pa oder auch mehr oder weniger betragen. Beim Füllen des Reifens 1 wird gesteuert von einer Steuereinrichtung 5 über Druckregler 10 und Füllventile 6 Füllluft in einen Füllraum 11 gebracht. Der Füllraum 11 wird im wesentlichen vom Innenraum der Glocke 4 und dem von der Unterlage, beispielsweise dem Fülltisch 8 oder dem Gurtband 9, und dem vom Scheibenrad 2 umschlossenen Raum gebildet. Aus dem Füllraum 11 gelangt die unter Druck stehende Füllluft in das Reifeninnere durch den Spalt zwischen oben liegendem Wulst des Luftreifens 1 und dem oben liegenden Felgenhorn des Scheibenrades 2. Bei Erreichen eines bestimmten Fülldruckes im Reifeninneren und Wegschwimmen (geringfügiges Absenken) der Unterlage liegen sowohl der unten liegende Wulst als auch der oben liegende Wulst des Luftreifens 1 luftdicht an den Felgenhörnern an.

Anschließend werden die während des Füllvorganges geschlossenen Entlüftungsventile 7 durch die Steuereinrichtung 5 geöffnet und die Füllventile 6 geschlossen. Hierbei erfolgt über die an die Öffnungen der Füllglocke angeschlossenen Luftleitungen die Entlüftung des Füllraumes 11. Bei dem in der Fig. 1 dargestellten Ausführungsbeispiel erfolgt die Entlüftung auch durch eine Öffnung im Fülltisch 8 über ein weiteres Entlüftungsventil 7. Beim Ausführungsbeispiel der Fig. 2 erfolgt die Entlüftung nur über den in der Füllglocke 4 vorgesehenen Öffnungen.

Nach dem Entlüften des Füllraumes 11 wird erneut Druckluft in den Füllraum 11 eingeleitet, wobei der Reifeninnenraum gegenüber dem Füllraum 11 luftdicht abgeschlossen bleibt. Die Reifenwülste liegen, wie in den Fig. 1 und 2 dargestellt ist, luftdicht an den Felgenhörnern dabei an. Bei dieser erneuten Druckluftzufuhr zum Füllraum 11 werden die Füllventile 6 geöffnet und ein Teil der Entlüftungsventile 7 wird geschlossen. Bei den dargestellten Ausführungsbeispielen wird jeweils nur ein Entlüftungsventil 7 geöffnet, so dass eine Entlüftungsverbindung gegenüber der Außenluft verbleibt. Dabei vermischt sich die aus dem Druckluftbehälter 3 erneut zugeführte Druckluft mit der beim ersten Entlüften abgekühlten, noch im Füllraum befindlichen Restluft, welche durch einen entsprechenden Leitungsausgang 12 über das geöffnete Ventil 7 nach außen gelangt. Beim Abheben der Füllglocke 4 von der oben liegenden Reifenseitenwand erfolgt dann keine Nebelbildung mehr. Der Temperaturunterschied zwischen der Außenluft und der im Füllraum 11 befindlichen Luft ist dann so gering, dass es zu keiner sichtbaren Nebelbildung mehr kommt.

Bei den dargestellten Ausführungsbeispielen werden zwei Füllventile 6 mit zugeordneten Druckreglern 10 verwendet. Es ist jedoch auch möglich, nur ein Füllventil oder mehr als zwei Füllventile zu verwenden, falls von den Radgrößen her dies möglich oder erforderlich ist. Ferner werden beim Ausführungsbeispiele der Fig. 1 drei Entlüftungsventile 7 verwendet. Es ist auch möglich, nur zwei oder auch mehr als drei Entlüftungsventile zu verwenden, falls von den Anforderungen her dies möglich oder notwendig ist. Auch bei dem in der Fig. 2 dargestellten Ausführungsbeispiel, welches zwei Entlüftungsventile 7 zeigt, können mehr als zwei Entlüftungsventile mit zugeordneten Leitungen und Öffnungen in der Füllglocke verwendet werden.

### Bezugszeichenliste

- 1: Luftreifen
- 2: Scheibenrad
- 3: Druckluftbehälter
- 4: Füllglocke
- 5: Steuereinrichtung
- 6: Füllventile
- 7: Entlüftungsventile
- 8: Fülltisch
- 9: Gurtband
- 10: Fülldruckregler
- 11: Füllraum
- 12: Leitungsausgang

## Patentansprüche

1. Verfahren zum Füllen eines Luftreifens eines Fahrzeugrades mit Füllluft, mit dem die Füllluft mit einer auf die Reifenseitenwand dicht aufgesetzten Füllglocke bis zu einem bestimmten Fülldruck, bei dem beide Reifenwülste dicht an den Felgenhörnern der Radfelge anliegen, in das Reifeninnere gefüllt wird, und anschließend der Füllraum entlüftet wird, **dadurch gekennzeichnet, dass** nach dem Entlüften der Füllraum erneut mit Druckluft beaufschlagt wird und der Füllraum dabei mit einer gegenüber dem vorherigen Entlüften verringerten Anzahl an Entlüftungsauslässen entlüftet wird.

2. Verfahren nach Anspruch 1, **dadurch gekennzeichnet, dass** die dem Füllraum erneut zugeführte Druckluft einen Bruchteil des Druckes aufweist, den die beim Füllen des Reifens verwendete Füllluft besitzt.

3. Verfahren nach Anspruch 2, **dadurch gekennzeichnet, dass** der reduzierte Druck etwa 1/10 oder mehr des Reifenfülldruckes entspricht.

4. Verfahren nach einem der Ansprüche 1 bis 3, **dadurch gekennzeichnet, dass** die im Füllraum verbliebene Restluft über einen Auslasskanal entfernt wird.

5. Vorrichtung zum Füllen eines Luftreifens eines Fahrzeugrades mit einem Druckluftbehälter, einer Füllglocke, welche auf eine Reifenseitenfläche aufsetzbar ist, wenigstens einem Füllventil, über welches einem das Füllglockeninnere aufweisenden Füllraum mit einem bestimmten Druck Füllluft aus dem Druckluftbehälter zum Reifenfüllen zugeführt wird, zwei oder mehr Entlüftungsventile, über welche der Füllraum nach dem Reifenfüllen entlüftet wird, und einer Steuereinrichtung zum Steuern der Füllventile und Entlüftungsventile, **dadurch gekennzeichnet, dass** die Steuereinrichtung (5) nach dem Entlüften des Füllraumes (11), das wenigstens eine Füllventil (6) und weniger als alle Entlüftungsventile für eine erneute Druckluftzufuhr in den Füllraum (11) ansteuert.

6. Vorrichtung nach Anspruch 5, **dadurch gekennzeichnet, dass** der Druck der erneut zugeführten Druckluft gegenüber dem Fülldruck beim Reifenfüllen reduziert ist.
